# EUROPÄISCHE PATENTSCHRIFT

(11) **EP 3 652 096 B1**
(45) Veröffentlichungstag und Bekanntmachung des Hinweises auf die Patenterteilung: **07.08.2024**
(21) Anmeldenummer: 18729074.7
(22) Anmeldetag: 29.05.2018
(51) Int. Cl.: B65G 47/51, B65G 47/68

(54) **FÖRDERSPEICHERVORRICHTUNG UND VERFAHREN ZUM BETREIBEN DER FÖRDERSPEICHERVORRICHTUNG**
CONVEYING STORAGE DEVICE AND METHOD FOR OPERATING THE CONVEYING STORAGE DEVICE
DISPOSITIF DE STOCKAGE ET DE CONVOYEUR ET PROCÉDÉ DE FONCTIONNEMENT DU DISPOSITIF DE STOCKAGE ET DE CONVOYEUR

(30) Priorität: 14.07.2017 DE 102017212124
(43) Veröffentlichungstag der Anmeldung: 20.05.2020
(73) Patentinhaber: Krones AG, 93073 Neutraubling (DE)
(72) Erfinder: MEIER, Matthias, 93073 Neutraubling (DE); KILGENSTEIN, Torsten, 93073 Neutraubling (DE)
(74) Vertreter: Grünecker Patent- und Rechtsanwälte PartG mbB
(86) Internationale Anmeldenummer: PCT/EP2018/064019
(87) Internationale Veröffentlichungsnummer: WO 2019/011515

(56) Entgegenhaltungen:
- EP-A1- 3 023 368
- EP-A2- 0 191 584
- WO-A1-2016/187366
- DE-A1- 10 015 566
- DE-A1- 2 120 239
- FR-A1- 2 918 974
- GB-A- 2 302 855

## Beschreibung

Die Erfindung betrifft eine Förderspeichervorrichtung gemäß dem Oberbegriff des Anspruchs 1 und ein Verfahren zum Betreiben der Förderspeichervorrichtung gemäß Anspruch 16.

### Stand der Technik

In Behälterbehandlungslinien, in denen Behälter im Allgemeinen mehrere Behandlungsstationen durchlaufen, können die Behandlungsstationen die Behälter mit einem unterschiedlichen Durchsatz pro Stunde behandeln und bei Störungen in einer oder mehrerer der Behandlungsstationen kann es zu einem Rückstau von Behältern kommen. Um einen Stopp der Behälterbehandlungsmaschine zu vermeiden, sind ein oder mehrere Stautische in der Behälterbehandlungslinie vorgesehen, die als Puffer, d.h. als Zwischenspeicher, für die Behälter dienen. Auf dem Stautisch/den Stautischen werden die sich ansammelnden Behälter so lange gespeichert, bis sie mittels eines Abförderers, z. B. einreihig und lückenlos, wieder dem Prozess/den Prozessen der Behälterbehandlungsmaschine zugeführt werden.

DE 603 08 498 T2 offenbart einen Stauförderer für Behälter mit einem Stautisch, dem stromaufwärts ein Beschickungsförderer vorgelagert ist, mit einem Transferförderer, der abwärts und in der Verlängerung des Stautischs angeordnet ist, und mit einem Übergangsförderer, der nebeneinander laufend und mit umgekehrter Durchlaufrichtung zu dem Transförderer ausgebildet ist. Ein druckloser Anordner erstreckt sich parallel zu dem Stautisch und ist als Tisch und weiter derart ausgebildet, dass er aufwärts durch den Übergangsförderer mit Behältern beschickt wird und Behälter einreihig abwärts zu einer abwärts angeordneten Bearbeitungsanlage führt. Der Tisch kann eine Länge haben, die an die Menge der Behälter anpassbar ist, die man zwischen zwei Behandlungsanlagen anzuhäufen versucht oder die man benötigt, um stromaufwärts angeordnete Behandlungsanlagen im Störungsfall leer zu fahren. Insbesondere kann der Tisch aus einem oder mehreren Modulen bestehen. Der Transferförderer umfasst eine erste Führungsschiene, um die Behälter auf den Übergangsförderer seitlich aufzuschieben. Der drucklose Anordner umfasst eine zweite Führungsschiene oberhalb des Tisches, um die Behälter einreihig anzugleichen. Der Übergangsförderer umfasst eine dritte Führungsschiene, um die Behälter quer hinsichtlich ihrer Bewegung und in eine Richtung anzutreiben, die jener entgegengesetzt ist, die ihnen durch die erste Führungsschiene vorgegeben wird. Durch die Nebeneinanderanordnung des Transferförderers und des drucklosen Anordners kann der Stauförderer platzsparend ausgebildet werden, so dass er wenig Bodenfläche belegt.

Hartness International, Inc., Greenville, S.C., USA bietet eine Puffervorrichtung DYNAC 7100SF an, bei der Behälter in einen sich in einer erste Richtung bewegenden Puffer einlaufen, dessen Größe dynamisch an die Menge der Behälter anpassbar ist, und Behälter mittels einer Umlenkvorrichtung von dem Puffer auf einen parallel, anschließend angeordneten und sich entgegen der ersten Richtung bewegenden Abförderer verbracht werden. Dem Abförderer nachfolgend ist eine Vereinzelungsvorrichtung angeordnet.

WO 2016/187366 A1 offenbart eine Vorrichtung in einem System zum Ansammeln von Artikeln, wie Flaschen, die einen Zuführförderer zum Aufnehmen von Artikeln aus dem System und einen Auslaufförderer zum Zurückführen der Artikel zu dem System umfasst. Die Vorrichtung umfasst einen Rahmen, an dem der Zuführförderer, der Auslaufförderer, eine Überführungsvorrichtung und eine Behältervereinzelungsvorrichtung angeordnet sind. Mit der Überführungsvorrichtung ist ein Teiler verbunden, der dafür sorgt, dass die Artikel in den entgegengesetzt gerichteten Artikelströmen nicht zusammenstoßen oder sich behindern.

DE 2 120 239 offenbart eine Vorrichtung zum Überführen von aufrechtstehend geförderten Gegenständen zwischen verschieden breiten Förderbändern, bei der bei verschiedenen Betriebsbedingungen ein fließendes und störungsfreies Überführen der Gegenstände und eine gute Versorgung des schmäleren Förderbandes gewährleistet ist.

### Aufgabe

Die Aufgabe der Erfindung besteht darin, eine Förderspeichervorrichtung zur Verfügung zu stellen, die eine dynamisch anpassbare Speichergröße und eine Behältervereinzelung bei optimiertem Platzbedarf der Förderspeichervorrichtung ermöglicht.

### Lösung

Diese Aufgabe wird erfindungsgemäß durch die Förderspeichervorrichtung nach Anspruch 1 und das Verfahren zum Betreiben der Förderspeichervorrichtung nach Anspruch 16 gelöst. Bevorzugte Ausführungsformen und vorteilhafte Weiterbildungen sind in den Unteransprüchen offenbart.

Die erfindungsgemäße Förderspeichervorrichtung für Behälter, wie Flaschen oder Dosen, umfasst einen ersten antreibbaren Förderer, der ausgelegt ist, Behälter auf einer ersten Förderoberfläche in eine erste Richtung zu fördern, und einen zweiten antreibbaren Förderer, der ausgelegt ist, Behälter auf einer zweiten Förderoberfläche in eine zweite Richtung zu fördern. Der erste Förderer und der zweite Förderer sind derart parallel zueinander angeordnet, dass Behälter von der ersten Förderoberfläche zu der zweiten Förderoberfläche überführbar sind. Die erste Richtung und die zweite Richtung sind gegenläufig. Zudem umfasst die Förderspeichervorrichtung eine entlang der Förderer verfahrbare Überführungsvorrichtung zum Überführen von Behältern von der ersten Förderoberfläche zu der zweiten Förderoberfläche, einen entlang eines Bereichs zwischen dem ersten Förderer und dem zweiten Förderer oberhalb der ersten Förderoberfläche und der zweiten Förderoberfläche verfahrbaren Führungskörper und ein Führungsgeländer zum Führen und Vereinzeln von Behältern, das in einem Winkel zur zweiten Richtung und oberhalb der zweiten Förderoberfläche verläuft. Das Führungsgeländer ist längenveränderlich ausgebildet und wirkt derart mit dem Führungskörper zusammen, dass eine Länge des Führungsgeländers und der Winkel veränderbar sind.

Während eines Betriebs der Förderspeichervorrichtung kann der Führungskörper in die erste Richtung verfahren und durch Zusammenwirken mit dem Führungsgeländer das Führungsgeländer verlängert werden bzw. kann der Führungskörper in die zweite Richtung verfahren werden und durch Zusammenwirkung mit dem Führungsgeländer das Führungsgeländer verkürzt werden.

Im Allgemeinen sind die erste und die zweite Transportoberfläche koplanar ausgebildet. Der erste und der zweite Förderer können in dem Bereich zwischen dem ersten und dem zweiten Förderer näherungsweise abstandslos aneinandergrenzen.

Die Überführungsvorrichtung kann mittels einer Verfahrvorrichtung verfahren werden, die vorzugsweise über der ersten und/oder der zweiten Förderoberfläche derart angeordnet ist, dass keine Störung des Behältertransports in der Förderspeichervorrichtung erfolgt; die Verfahrvorrichtung kann auch seitlich der Förderspeichervorrichtung angeordnet sein.

Der Führungskörper kann mittels einer anderen Verfahrvorrichtung verfahren werden, die vorzugsweise über der ersten und/oder der zweiten Förderoberfläche derart angeordnet ist, dass keine Störung des Behältertransports in der Förderspeichervorrichtung erfolgt; die andere Verfahrvorrichtung kann auch seitlich der Förderspeichervorrichtung angeordnet sein.

Die Verfahrvorrichtung der Überführungsvorrichtung bzw. des Führungskörpers und somit die Überführungsvorrichtung bzw. der Führungskörper können jeweils mit einem steuerbaren Antriebsmotor angetrieben werden.

Das Führungsgeländer kann derart angeordnet sein, dass es von dem Bereich zwischen dem ersten und dem zweiten Förderer oberhalb der zweiten Förderoberfläche zu einem in der zweiten Richtung liegenden Endbereich des zweiten Förderers reicht. Der Ausdruck "oberhalb" ist hierbei derart zu verstehen, dass das Führungsgeländer nicht in Kontakt mit der zweiten Förderoberfläche kommt, aber in der Fördervorrichtung vorhandene Behälter die in die zweite Richtung bewegt werden in Kontakt mit dem Führungsgeländer kommen können, so dass ein Führen und Vereinzeln von Behältern ermöglicht wird. So kann gewährleistet werden, dass Behälter, die auf der zweiten Förderoberfläche in die zweite Richtung gefördert werden, mit dem Führungsgeländer zumindest teilweise in Kontakt kommen und dadurch auf einem Förderweg entlang des Führungsgeländers vereinzelt werden, d.h. in eine einzelne, lückenlose Spur verbracht werden.

Es kann vorgesehen sein, dass das erste Ende des Führungsgeländers mit dem Führungskörper verbunden ist und dass das zweite Ende des Führungsgeländers mit dem in der zweiten Richtung liegenden Endbereich, der im Allgemeinen nicht-verfahrbar ausgebildet ist, des zweiten Förderers verbunden ist. Daher kann das erste Ende mittels des Führungskörpers verfahren werden, wohingegen das zweite Ende im Allgemeinen nicht verfahren wird. Da das Führungsgeländer längenveränderlich ausgebildet ist, ist durch ein Verfahren des Führungskörpers die Länge des Führungsgeländers veränderbar.

Das Führungsgeländer kann mittels einer oder mehrerer Rollen auf der ersten Förderoberfläche abgestützt werden.

Die Überführungsvorrichtung kann mittels einer oder mehrerer Rollen auf der ersten und/oder der zweiten Förderoberfläche abgestützt werden.

Das Führungsgeländer kann teleskopartig ausgebildet sein, wobei vorzugsweise das Führungsgeländer drehbar um eine erste senkrechte Achse und drehbar um eine zweite senkrechte Achse ausgebildet ist, wobei die erste Achse an dem Führungskörper vorgesehen ist und wobei die zweite Achse in einem nicht-verfahrbaren Endbereich des zweiten Förderers vorgesehen ist. Durch die teleskopartige Ausbildung des Führungsgeländers, ist es möglich, seine Länge auf einfache Weise zu verändern. Wird der Führungskörper beispielsweise in die erste Richtung verfahren, so vergrößert sich die Länge des Führungsgeländers, wird der Führungskörper dagegen beispielsweise in die zweite Richtung verfahren, so verkleinert sich die Länge des Führungsgeländers, wobei die Längenänderung durch das Verfahren des Führungskörpers hervorgerufen wird. Der Winkel zwischen dem Führungsgeländer und der zweiten Richtung ändert sich ebenfalls durch das Verfahren des Führungskörpers. Die erste und die zweite Achse ermöglichen die erforderliche Beweglichkeit zwischen Führungsgeländer, Führungskörper und dem nicht-verfahrbaren Endbereich des zweiten Förderers, die bei einem Verfahren des Führungskörpers die Längenänderung des Führungsgeländers und die Winkeländerung zulässt.

In einer anderen Ausführungsform kann das Führungsgeländer als ein längenveränderliches und gespanntes Band ausgebildet sein, wobei vorzugsweise eine Längenveränderung des Bands durch ein Auf- bzw. Abwickeln des Bandes erfolgen kann, wobei vorzugsweise eine Spannung des Bands mittels mindestens einem Motor und/oder mittels mindestens einer Feder erreicht wird. Das Band ist vorzugsweise als flaches Band ausgebildet.

Der Führungskörper kann in seiner Breite veränderbar ausgebildet sein. Die Breite kann mittels einer Spindel oder mittels eines Linearantriebs verändert werden, die beispielsweise von einem oder mehreren Antriebsmotoren angetrieben und von einer oder mehreren Steuervorrichtungen gesteuert werden. Auch andere bekannte Arten des Antriebs sind denkbar.

Vorzugsweise kann der Führungskörper unabhängig von der Überführungsvorrichtung verfahrbar ausgebildet seine oder der Führungskörper kann mit der Überführungsvorrichtung gekoppelt ausgebildet und zusammen mit der Überführungsvorrichtung verfahrbar ausgebildet sein.

Der erste Förderer und der zweite Förderer können als lineare Förderer ausgebildet sein.

Der erste und/oder der zweite Förderer können jeweils mehrere parallele, endlose Förderbänder oder Scharnierbandketten umfassen, wobei die Förderbänder oder die Scharnierbandketten vorzugsweise jeweils einzeln antreibbar sind. Vorzugsweise entspricht die Breite eines solchen Förderbands oder einer solchen Scharnierbandkette der maximalen Ausdehnung des Querschnitts der zu förderenden Behälter plus 1% - 5%; beispielsweise kann die Breite 85 mm betragen. Es kann vorgesehen sein, dass die Förderbänder/Scharnierbandketten, die näher zu dem Bereich zwischen dem ersten und dem zweiten Förderer angeordnet sind, mit einer kleineren Geschwindigkeit angetrieben werden als solche Förderbänder/Scharnierbandketten, die weiter weg von diesem Bereich liegen.

Die Überführungsvorrichtung kann sich im Wesentlichen quer über und oberhalb der ersten Förderoberfläche erstrecken. Behälter auf der ersten Förderoberfläche können durch die Überführungsvorrichtung abgefangen und im Wesentlichen quer über die erste Förderoberfläche auf die zweite Förderoberfläche gelenkt werden. Der Ausdruck "oberhalb" ist hierbei derart zu verstehen, dass die Überführungsvorrichtung nicht in Kontakt mit der ersten Förderoberfläche kommt, aber darauf befindliche Behälter in Kontakt mit der Überführungsvorrichtung kommen können.

Die Überführungsvorrichtung kann sich zudem im Wesentlichen quer über und oberhalb zumindest eines Teils der zweiten Förderoberfläche erstrecken. Somit kann die Überführungsvorrichtung Behälter, die auf der ersten Förderoberfläche abgefangen und im Wesentlichen quer über die erste Förderoberfläche auf die zweite Förderoberfläche gelenkt wurden, auch noch auf der der zweiten Förderoberfläche lenken, bevor die Behälter durch den Förderer in die zweite Richtung gefördert werden.

Die Überführungsvorrichtung kann ein bogenförmiges oder gerades Führungselement umfassen, wobei vorzugsweise über das Führungselement ein antreibbares, endloses Förderband verläuft, wobei das Förderband vorzugsweise als Gripperkette oder Riemen ausgebildet ist. Die Antriebsrichtung des Förderbands ist derart vorgesehen, dass Behälter von der ersten zu der zweiten Förderoberfläche überführbar sind.

Zwischen der ersten Förderoberfläche und der zweiten Förderoberfläche kann eine langgestreckte Übergangsfläche angeordnet sein. Vorzugsweise ist die Breite der Übergangsfläche kleiner oder in etwa gleich der maximalen Ausdehnung des Querschnitts der zu förderenden Behälter. Die Übergangsfläche kann vorgesehen sein, um bei einem Übergang von der ersten zu der zweiten Förderoberfläche, die Geschwindigkeitsänderung abzumildern.

Die Übergangsfläche kann als ein dritter Förderer mit einer dritten Förderoberfläche ausgebildet sein, der in die erste Richtung und in die zweite Richtung bewegbar ausgebildet ist.

Der Führungskörper kann an der dritten Förderoberfläche angeordnet und vorzugsweise mittels des dritten Förderers verfahrbar sein. So ist keine weitere Verfahrvorrichtung für den Führungskörper erforderlich. Auch ist es denkbar, dass der Führungskörper beispielsweise mittels einer Rolle auf der dritten Förderoberfläche abgestützt wird.

Die Förderspeichervorrichtung kann zudem ein weiteres Führungsgeländer zum Führen von Behältern umfassen, das oberhalb der ersten Förderoberfläche und parallel zu der ersten Richtung verläuft, wobei das weitere Führungsgeländer längenveränderlich ausgebildet ist, vorzugsweise teleskopartig, wobei vorzugsweise das weitere Führungsgeländer parallel zu der ersten Förderoberfläche und senkrecht zu der ersten Richtung seitlich verschiebbar ausgebildet ist. Durch das weitere Führungsgeländer ist es mittels der seitlichen Verschiebbarkeit möglich, die für Behälter zugängliche Breite der ersten Förderoberfläche zu verkleinern bzw. zu vergrößern. Die Länge des weiteren Führungsgeländers wird vorzugsweise an die Position des Führungskörpers angepasst.

Die Förderspeichervorrichtung kann zudem einen oder mehrere Antriebsmotoren für den ersten Förderer, den zweiten Förderer, die Überführungsvorrichtung und den Führungskörper umfassen.

Die Förderspeichervorrichtung kann zudem mindestens eine Sensorvorrichtung und mindestens eine Steuervorrichtung umfassen. Die Sensorvorrichtung ist dazu ausgelegt, Behälter mittels eines oder mehrerer Sensoren zu erfassen, entsprechende Sensordaten zu erstellen und die Sensordaten an die mindestens eine Steuervorrichtung zu übermitteln, die ausgelegt ist, den ersten Förderer, den zweiten Förderer, die Überführungsvorrichtung und den Führungskörper bzw. deren Antriebsmotoren zu steuern. Vorzugsweise ist die Steuervorrichtung derart ausgebildet, dass ein Verfahren der Überführungsvorrichtung auf Basis von Fördergeschwindigkeiten des ersten und/oder zweiten Förderers erfolgt. Auch ist es denkbar, dass eine Kamera oder ein anderes geeignetes System Daten des Belegungszustands (Prozentsatz der belegten Breite im Verhältnis zur gesamten Breite) des zufördernden und/oder des abfördernden Förderers vor bzw. nach der Förderspeichervorrichtung erfasst und die Steuervorrichtung auf Basis dieser Daten die Überführungsvorrichtung derart verfährt, dass die benötigte Speicherkapazität der Förderspeichervorrichtung bereitgestellt wird. Dabei wird die Überführungsvorrichtung vom Einlauf wegbewegt, sofern mehr Behälter in die Förderspeichervorrichtung ein- als auslaufen und die Überführungsvorrichtung wird zum Einlauf hinbewegt, sofern mehr Behälter aus der Förderspeichervorrichtung aus- als in sie einlaufen.

Ein erfindungsgemäßes Verfahren, vorzugsweise ein computergesteuertes Verfahren, wird zum Betreiben der Förderspeichervorrichtung wie oben und/oder weiter unten beschrieben verwendet.

### Figurenbeschreibung

Die beigefügten Figuren stellen beispielhaft zum besseren Verständnis und zur Veranschaulichung Aspekte der Erfindung dar. Es zeigt:
- Figur 1: eine Draufsicht einer ersten Ausführungsform einer Förderspeichervorrichtung,
- Figur 2: eine Schrägansicht der Förderspeichervorrichtung von Figur 1,
- Figur 3: eine Draufsicht einer zweiten Ausführungsform einer Förderspeichervorrichtung,
- Figur 4: eine Schrägansicht der Förderspeichervorrichtung von Figur 3,
- Figur 5: eine Draufsicht einer dritten Ausführungsform einer Förderspeichervorrichtung,
- Figur 6: eine Schrägansicht der Förderspeichervorrichtung von Figur 5,
- Figur 7: eine Draufsicht einer vierten Ausführungsform einer Förderspeichervorrichtung,
- Figur 8: eine Schrägansicht der Förderspeichervorrichtung von Figur 7,
- Figur 9A: eine Draufsicht auf eine schematisch reduzierte Darstellung einer Förderspeichervorrichtung in einem ersten Betriebszustand,
- Figur 9B: eine Draufsicht auf die Förderspeichervorrichtung in einem zweiten Betriebszustand,
- Figur 9C: eine Draufsicht auf die Förderspeichervorrichtung in einem dritten Betriebszustand,
- Figur 10A: eine Draufsicht auf eine schematisch reduzierte Darstellung einer Förderspeichervorrichtung mit breitenveränderlichem Führungskörper und weiterem Führungsgeländer in einem ersten Betriebszustand,
- Figur 10B: eine Draufsicht auf die Förderspeichervorrichtung in einem zweiten Betriebszustand und
- Figur 10C: eine Draufsicht auf die Förderspeichervorrichtung in einem dritten Betriebszustand.

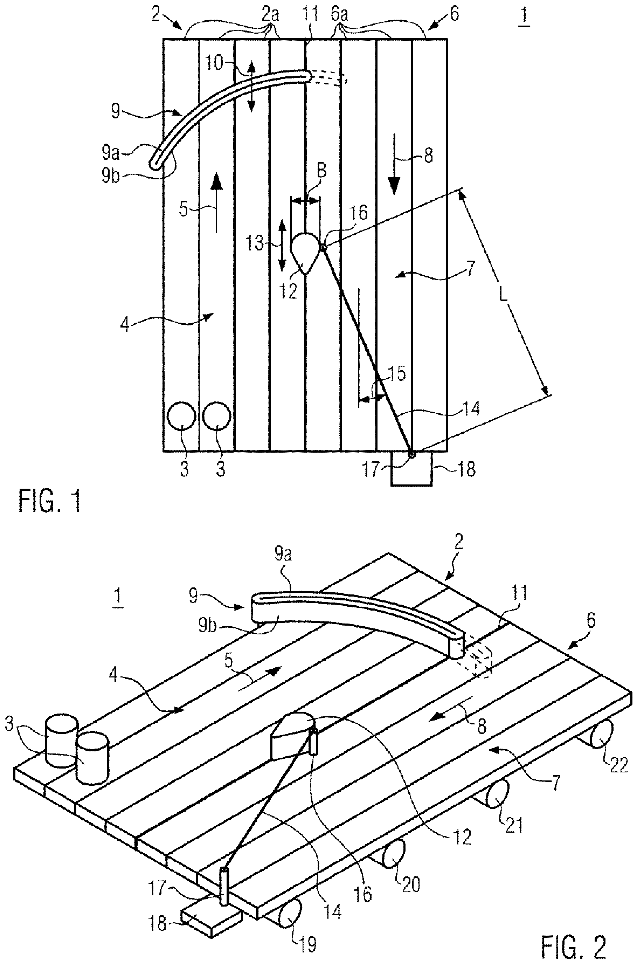

Figur 1 zeigt eine Draufsicht einer ersten Ausführungsform einer Förderspeichervorrichtung 1 für Behälter 3, wie Flaschen oder Dosen; in der Figur 1 sind exemplarisch Dosen 3 dargestellt.

Die Förderspeichervorrichtung 1 umfasst einen ersten antreibbaren Förderer 2, der Behälter 3 auf einer ersten Förderoberfläche 4 in eine erste Richtung 5 fördern kann, und einen zweiten antreibbaren Förderer 6, der Behälter 3 auf einer zweiten Förderoberfläche 7 in eine zweite Richtung 8 fördern kann. Der erste 2 und der zweite Förderer 6 sind derart parallel zueinander angeordnet, dass Behälter 3 von der ersten 4 zu der zweiten Förderoberfläche 7 überführbar sind; im Allgemeinen sind die erste 4 und die zweite Förderoberfläche 7 koplanar. Die erste 5 und die zweite Richtung 8 sind gegenläufig.

Wird hier oder weiter unten angegeben, dass Behälter auf einem Förderer sind/transportiert werden, usw., so ist damit gemeint, dass die Behälter auf der Fördereroberfläche sind/transportiert werden usw.

In der Darstellung umfasst der erste Förderer 2 exemplarisch vier Förderbänder 2a und der zweite Förderer 6 exemplarisch vier Förderbänder 6a. Bei einem Betrieb der Förderspeichervorrichtung 1 können die von dem Bereich 11 weiter entfernten Förderbänder 2a, 6a schneller in die erste 5 bzw. zweite Richtung 8 bewegt werden als die näher am Bereich 11 liegenden Förderbänder 2a, 6a.

Die Förderspeichervorrichtung 1 umfasst zudem eine entlang der Förderer 2, 6 verfahrbare Überführungsvorrichtung 9 zum Überführen von Behältern 3 von der ersten Förderoberfläche 4 zu der zweiten Förderoberfläche 7, wobei die Überführungsvorrichtung 9 in eine Richtung 10 parallel zu der ersten 5 bzw. der zweiten Richtung 8 verfahrbar ist. Die Überführungsvorrichtung 9 umfasst ein bogenförmiges Führungselement 9a über das ein antreibbares, endloses Förderband 9b verläuft. Mit durchgezogenen Linien ist das Überführungselement 9 dargestellt, dass sich im Wesentlichen quer über und oberhalb der ersten Förderoberfläche 4 erstreckt; mit gestrichelten Linien ist optional ein zusätzliches Teil der Überführungsvorrichtung 9 dargestellt, die sich im wesentlichen zusätzlich quer über und oberhalb eines Teils der zweiten Förderoberfläche 7 erstreckt.

Des Weiteren umfasst die Förderspeichervorrichtung 1 einen entlang eines Bereichs 11 zwischen dem ersten Förderer 2 und dem zweiten Förderer 6 oberhalb der ersten Förderoberfläche 4 und der zweiten Förderoberfläche 7 verfahrbaren Führungskörper 12, wobei der Führungskörper 12 in eine Richtung 13 parallel zu der ersten 5 bzw. der zweiten Richtung 8 verfahrbar ist. Der Führungskörper 12 ist unabhängig von der Überführungsvorrichtung 9 verfahrbar. Vorzugsweise ist der Führungskörper 12 in seiner Breite B veränderbar ausgebildet.

Zudem umfasst die Förderspeichervorrichtung 1 ein längenveränderliches Führungsgeländer 14 zum Führen und Vereinzeln von Behältern 3, das in einem Winkel 15 zur zweiten Richtung 8 und oberhalb der zweiten Förderoberfläche 7 verläuft und derart mit dem Führungskörper 12 zusammenwirkt, dass eine Länge L des Führungsgeländers 14 und der Winkel 15 veränderbar sind, beispielsweise, wenn der Führungskörper 12 in die erste 5 bzw. die zweite Richtung 8 bewegt wird.

Das Führungsgeländer 14 ist drehbar um eine erste senkrechte Achse 16 und drehbar um eine zweite senkrechte Achse 17 ausgebildet ist, wobei die erste Achse 16 an dem Führungskörper 12 vorgesehen ist und wobei die zweite Achse 17 in einem nicht-verfahrbaren Endbereich 18 des zweiten Förderers 5 - in der zweiten Richtung 8 gesehen - vorgesehen ist.

Durch ein Verfahren des Führungskörpers 12 in die erste Richtung 5 erfolgt daher eine Verlängerung des Führungsgeländers 14 und eine Verkleinerung des Winkels 15. Entsprechend erfolgt durch ein Verfahren des Führungskörpers 12 in die zweite Richtung 8 eine Verkürzung des Führungsgeländers 14 und eine Vergrößerung des Winkels 15.

Figur 2 zeigt eine Schrägansicht der Förderspeichervorrichtung 1 von Figur 1. In dieser Darstellung sind beispielhaft Antriebsmotoren 19, 20, 21, 22 für den ersten Förderer 2, den zweiten Förderer 6, die Überführungsvorrichtung 9 und den Führungskörper 12 dargestellt, die beispielsweise mittels mindestens einer Steuervorrichtung steuerbar sind.

In der Schrägansicht ist zu erkennen, dass der Führungskörper 12, die Überführungsvorrichtung 10 und das Führungsgeländer 14 oberhalb der ersten 4 bzw. der zweiten Förderoberfläche 7 angeordnet sind. Der Ausdruck "oberhalb" ist hierbei derart zu verstehen, dass a) der Führungskörper 12 nicht in Kontakt mit der ersten 4 bzw. der zweiten Förderoberfläche 7 kommt, aber in der Förderspeichervorrichtung 1 vorhandene Behälter 3 in Kontakt mit dem Führungskörper 12 kommen können, so dass mittels des Führungskörpers 12 ein behälterfreies Gebiet in und seitlich des Bereich 11 ausgebildet werden kann, b) die Überführungsvorrichtung 9 nicht in Kontakt mit der ersten Förderoberfläche 4 bzw. dem Teil der zweiten Förderoberfläche 8 kommt, aber in der Förderspeichervorrichtung 1 vorhandene Behälter 3 in Kontakt mit der Überführungsvorrichtung 9 kommen können, so dass ein Überführen von Behältern 3 von der ersten 4 zu der zweiten Förderoberfläche 7 ermöglicht wird und c) das Führungsgeländer 14 nicht in Kontakt mit der zweiten Förderoberfläche 7 kommt, aber in der Förderspeichervorrichtung 1 vorhandene Behälter 3 in Kontakt mit dem Führungsgeländer 14 kommen können, so dass ein Führen und Vereinzeln von Behältern 3 ermöglicht wird. Die Überführungsvorrichtung 9 kann mittels einer Rolle auf der ersten 4 und/oder der zweiten Förderoberfläche abgestützt werden.

Durch das Führungsgeländer 14 kann gewährleistet werden, dass Behälter 3, die auf der zweiten Förderoberfläche 7 in die zweite Richtung 8 gefördert werden, mit dem Führungsgeländer 14 zumindest teilweise in Kontakt kommen und dadurch auf einem Förderweg entlang des Führungsgeländers 14 vereinzelt werden, d.h. in eine einzelne, lückenlose Spur verbracht werden.

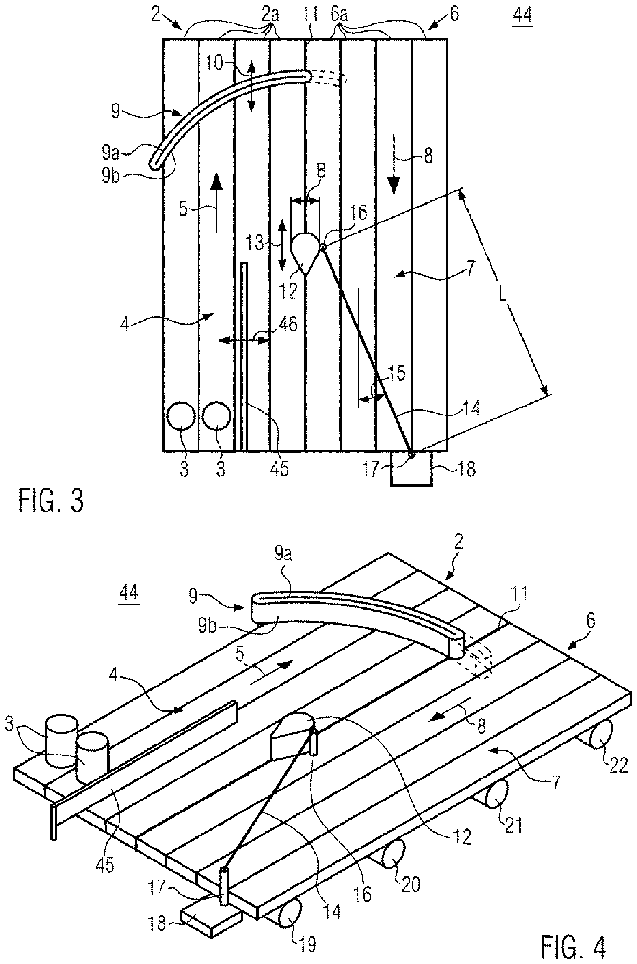

Figur 3 zeigt eine Draufsicht einer zweiten Ausführungsform einer Förderspeichervorrichtung 44. Diese entspricht bis auf ein weiteres Führungsgeländer 45 zum Führen von Behältern 3 der ersten Ausführungsform 1.

Das weitere Führungsgeländer 45 ist oberhalb der ersten Förderoberfläche 4 angeordnet und verläuft parallel zu der ersten Richtung 5, wobei das weitere Führungsgeländer 45 längenveränderlich ausgebildet ist. Das weitere Führungsgeländer 45 ist in einer Richtung 46 parallel zu der ersten Förderoberfläche 4 und senkrecht zu der ersten Richtung 5 seitlich verschiebbar ausgebildet. Beispielsweise kann über der Förderspeichervorrichtung 44 eine Halte- und Bewegungsstruktur zum Verschieben des weiteren Führungsgeländers 45 angeordnet sein. Auch ist es möglich das Führungsgeländer 45 vom Bereich 11 her lateral und/oder vertikal mit geeigneten Mitteln abzustützen.

Durch das weitere Führungsgeländer 45 ist es mittels der seitlichen Verschiebbarkeit möglich, die für Behälter 3 zugängliche Breite der ersten Förderoberfläche 4 zu verkleinern bzw. zu vergrößern. Die Länge des weiteren Führungsgeländers 45 wird vorzugsweise an die Position des Führungskörpers 12 angepasst oder das Führungsgeländer 45 ist direkt mit dem Führungskörper 12 verbunden.

Der Ausdruck "oberhalb" ist hierbei derart zu verstehen, dass das weitere Führungsgeländer 45 nicht in Kontakt mit der ersten Förderoberfläche 4 kommt, aber in der Förderspeichervorrichtung 44 vorhandene Behälter 3 in Kontakt mit dem weiteren Führungsgeländer 45 kommen können, so dass ein Führen von Behältern 3 ermöglicht wird. Das Führungsgeländer 45 kann mittels einer Rolle auf der ersten Förderoberfläche 4 abgestützt werden.

Figur 4 zeigt eine Schrägansicht der Förderspeichervorrichtung 44 von Figur 3.

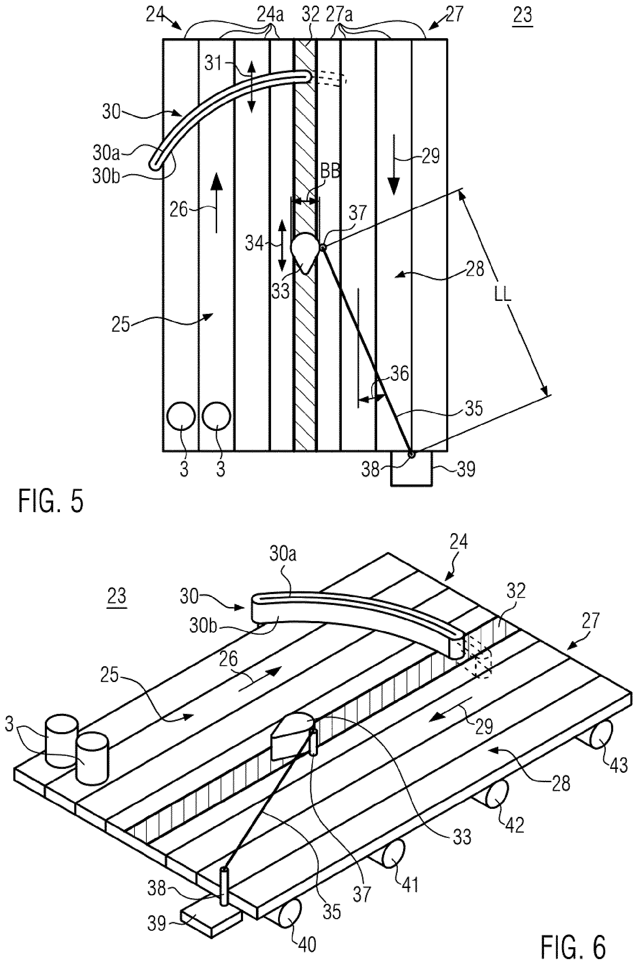

Figur 5 zeigt eine Draufsicht einer dritten Ausführungsform einer Förderspeichervorrichtung 23 für Behälter 3. Die Förderspeichervorrichtung 23 umfasst einen ersten antreibbaren Förderer 24, der Behälter 3 auf einer ersten Förderoberfläche 25 in eine erste Richtung 26 fördern kann, und einen zweiten antreibbaren Förderer 27, der Behälter 3 auf einer zweiten Förderoberfläche 28 in eine zweite Richtung 29 fördern kann. Der erste 24 und der zweite Förderer 27 sind derart parallel zueinander angeordnet sind, dass Behälter 3 von der ersten 25 zu der zweiten Förderoberfläche 28 überführbar sind; im Allgemeinen sind die erste 25 und die zweite Förderoberfläche 28 koplanar. Die erste 26 und die zweite Richtung 29 sind gegenläufig.

In der Darstellung umfasst der erste Förderer 24 exemplarisch vier Förderbänder 24a und der zweite Förderer 27 exemplarisch vier Förderbänder 27a. Beim Betrieb der Förderspeichervorrichtung 47 können die von dem Bereich 32 weiter entfernteren Förderbänder 24a, 27a schneller in die erste 26 bzw. zweite Richtung 29 bewegt werden als die näher am Bereich 32 liegenden Förderbänder 24a, 27a.

Die Förderspeichervorrichtung 23 umfasst zudem eine entlang der Förderer 24, 27 verfahrbare Überführungsvorrichtung 30 zum Überführen von Behältern 3 von der ersten Förderoberfläche 25 zu der zweiten Förderoberfläche 28, wobei die Überführungsvorrichtung 30 in eine Richtung 31 parallel zu der ersten 26 bzw. der zweiten Richtung 29 verfahrbar ist. Die Überführungsvorrichtung 30 umfasst ein bogenförmiges Führungselement 30a über das ein antreibbares, endloses Förderband 30b verläuft. Mit durchgezogenen Linien ist das Überführungselement 30 dargestellt, das sich im Wesentlichen quer über und oberhalb der ersten Förderoberfläche 25 erstreckt. Mit gestrichelten Linien ist optional ein zusätzliches Teil der Überführungsvorrichtung 30 dargestellt, die sich im Wesentlichen zusätzlich quer über und oberhalb eines Teils der zweiten Förderoberfläche 28 erstreckt.

In einem Bereich zwischen den ersten 24 und dem zweiten Förderer 27 ist eine Übergangsfläche 32 (schraffiert hervorgehoben) vorgesehen. Des Weiteren umfasst die Förderspeichervorrichtung 23 einen entlang der Übergangsfläche 32 oberhalb der ersten 25 und der zweiten Förderoberfläche 28 verfahrbaren Führungskörper 33, wobei der Führungskörper 33 in eine Richtung 34 parallel zu der ersten 26 bzw. der zweiten Richtung 29 verfahrbar ist. Der Führungskörper 33 ist unabhängig von der Überführungsvorrichtung 30 verfahrbar. Vorzugsweise ist der Führungskörper 33 in seiner Breite BB veränderbar ausgebildet.

Zudem umfasst die Förderspeichervorrichtung 23 ein längenveränderliches Führungsgeländer 35 zum Führen und Vereinzeln von Behältern 3, das in einem Winkel 36 zur zweiten Richtung 29 und oberhalb der zweiten Förderoberfläche 28 verläuft und derart mit dem Führungskörper 33 zusammenwirkt, dass eine Länge LL des Führungsgeländers 35 und der Winkel 36 veränderbar sind, beispielsweise, wenn der Führungskörper 33 in die erste 26 bzw. die zweite Richtung 29 bewegt wird.

Das Führungsgeländer 35 ist drehbar um eine erste senkrechte Achse 37 und drehbar um eine zweite senkrechte Achse 38 ausgebildet ist, wobei die erste Achse 37 an dem Führungskörper 33 vorgesehen ist und wobei die zweite Achse 38 in einem nicht-verfahrbaren Endbereich 39 des zweiten Förderers 27 - in der zweiten Richtung gesehen - vorgesehen ist.

Durch ein Verfahren des Führungskörpers 33 in die erste Richtung 26 erfolgt daher eine Verlängerung des Führungsgeländers 35 und eine Verkleinerung des Winkels 36. Entsprechend erfolgt durch ein Verfahren des Führungskörpers 33 in die zweite Richtung 29 eine Verkürzung des Führungsgeländers 35 und eine Vergrößerung des Winkels 36.

Figur 6 zeigt eine Schrägansicht der Förderspeichervorrichtung 23 von Figur 5. In dieser Darstellung sind beispielhaft Antriebsmotoren 40, 41, 42, 43 für den ersten Förderer 24, den zweiten Förderer 27, die Überführungsvorrichtung 30 und den Führungskörper 33 dargestellt, die beispielsweise mittels mindestens einer Steuervorrichtung steuerbar sind.

In der Schrägansicht ist zu erkennen, dass der Führungskörper 33, die Überführungsvorrichtung 30 und das Führungsgeländer 35 oberhalb der ersten 24 bzw. der zweiten Förderoberfläche 28 angeordnet sind. Der Ausdruck "oberhalb" hat hierbei die gleiche Bedeutung wie bereits in Zusammenhang mit der ersten Ausführungsform 1 erläutert. Der Führungskörper 33 kann mit der Übergangsfläche 32 gekoppelt sein, so dass mittels des Antriebsmotors 42 der Durchgangsbereich von dem ersten Förderer 24 zu dem zweiten Förderer 27 in seiner Größe variiert werden kann.

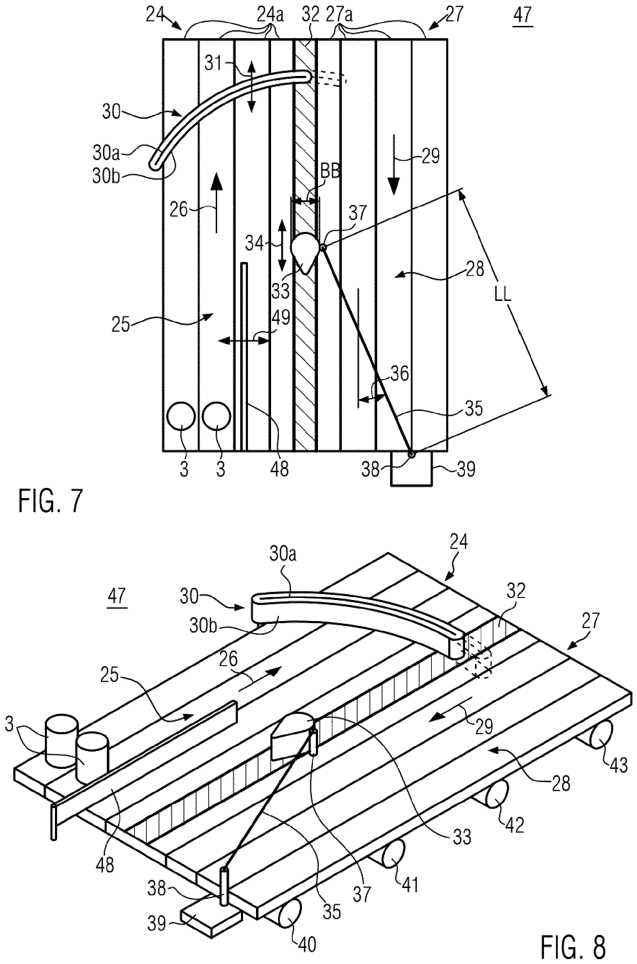

Figur 7 zeigt eine Draufsicht einer vierten Ausführungsform einer Förderspeichervorrichtung 47. Diese entspricht bis auf ein weiteres Führungsgeländer 48 zum Führen von Behältern 3 der dritten Ausführungsform 23.

Das weitere Führungsgeländer 48 ist oberhalb der ersten Förderoberfläche 25 angeordnet und verläuft parallel zu der ersten Richtung 26, wobei das weitere Führungsgeländer 48 ebenfalls längenveränderlich ausgebildet ist. Das weitere Führungsgeländer 48 ist in einer Richtung 49 parallel zu der ersten Förderoberfläche 25 und senkrecht zu der ersten Richtung 26 seitlich verschiebbar ausgebildet. Beispielsweise kann über der Förderspeichervorrichtung 47 eine Halte- und Bewegungsstruktur zum Verschieben des weiteren Führungsgeländers 48 angeordnet sein. Auch eine laterale Abstützung ist möglich.

Durch das weitere Führungsgeländer 48 ist es mittels der seitlichen Verschiebbarkeit möglich, die für Behälter 3 zugängliche Breite der ersten Förderoberfläche 25 zu verkleinern bzw. zu vergrößern. Die Länge des weiteren Führungsgeländers 48 wird vorzugsweise an die Position des Führungskörpers 33 angepasst.

Der Ausdruck "oberhalb" ist hierbei derart zu verstehen, dass das weitere Führungsgeländer 48 nicht in Kontakt mit der ersten Förderoberfläche 25 kommt, aber in der Förderspeichervorrichtung 47 vorhandene Behälter 3 in Kontakt mit dem weiteren Führungsgeländer 48 kommen können, so dass ein Führen von Behältern 3 ermöglicht wird.

Figur 8 zeigt eine Schrägansicht der Förderspeichervorrichtung 47 von Figur 7.

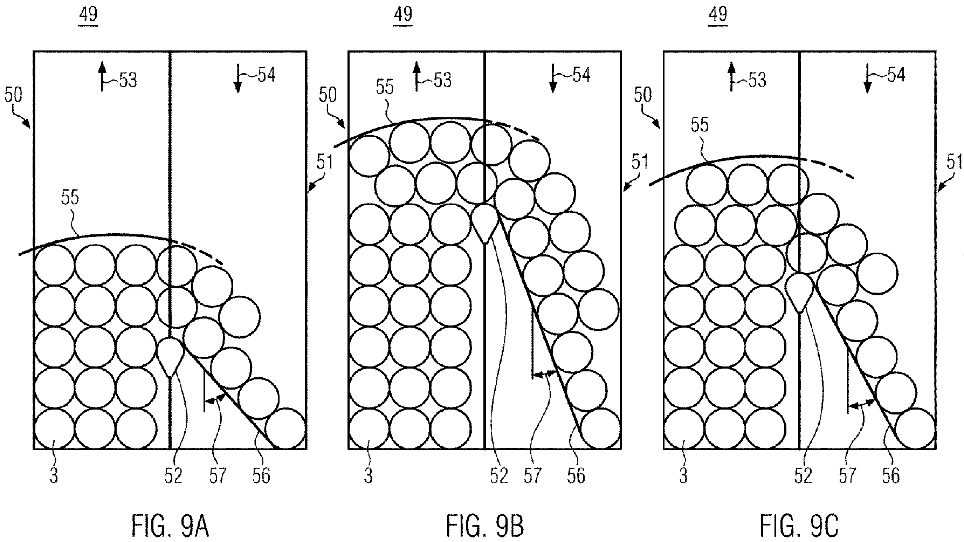

In den Figuren 9A bis 9C sind Draufsichten auf eine schematisch reduzierte Darstellung einer Förderspeichervorrichtung 49, die der ersten 1 bzw. dritten Ausführungsform 23 entsprechen kann, in drei verschiedenen Zuständen während des Betriebs der Förderspeichervorrichtung 49 dargestellt. Der Übersichtlichkeit halber wurden die einzelnen Förderbänder des ersten 50 bzw. des zweiten Förderers 51 nicht dargestellt. Auch eine mögliche Übergangsfläche (dritte Ausführungsform 23) entlang derer oder mittels derer der Führungskörper 52 in die erste 53 bzw. die zweite Richtung 54 bewegbar ist, wurde nicht dargestellt, sondern lediglich ein Bereich zwischen dem ersten 50 und dem zweiten Förderer 51.

Figur 9A zeigt die Förderspeichervorrichtung 49 in einem ersten Betriebszustand, wobei sich der Führungskörper 52 und die Überführungsvorrichtung 55 jeweils in einer ersten Position befinden. Diese beiden ersten Positionen sind unterschiedlich und derart relativ zueinander angeordnet, dass in einem Transferbereich zwischen dem Führungskörper 52 und der Überführungsvorrichtung 55 eine Überführung von Behältern 3 von dem ersten Förderer 50 zu dem zweiten Förderer 51 möglich ist. Exemplarisch werden in drei Spuren eine Vielzahl von Behältern 3 auf der Förderoberfläche des ersten Förderers 50 in die erste Richtung 53 auf die Überführungsvorrichtung 55 zu bewegt. Diejenigen Behälter 3, die in Kontakt mit ihr kommen, werden durch sie zu dem zweiten Förderer 57 überführt, so dass Behälter 3 auf den ersten Förderer 50 nachrücken können. Der Führungskörper 52 kann die Überführungsvorrichtung 55 dahingehend unterstützen, dass er eine räumliche Trennung von Behältern 3 auf der ersten Förderoberfläche und Behältern auf der zweiten Förderoberfläche erzeugt. Vorzugsweise sind zwischen dem Führungskörper 52 und dem einlaufseitigen Ende der Vorrichtung noch weitere Mittel vorgesehen, um einen Übergang von Behältern 3 von Förderer 50 auf Förderer 51 außerhalb des vorgesehenen Übergangsbereiches zwischen Überführungsvorrichtung 55 und Führungskörper 52 zu verhindern. Das an dem Führungskörper 52 mit einem Ende angeordnete Führungsgeländer 56 bildet mit der zweiten Richtung 54 einen Winkel 57 aus. Der zweite Förderer 51 transportiert die an ihn übergebenen Behälter 3 in die zweite Richtung 54, so dass sie auf das Führungsgeländer 56 treffen, das zum Führen und Vereinzelten der Behälter 3 dient, wodurch die Behälter 3 in eine einzelne, lückenlose Spur verbracht werden. Auf dem ersten Förderer 50 sind im Vergleich zu dem zweiten Förderer 51 mehr Behälter 3 angeordnet, wodurch sich die Speicherfunktion der Förderspeichervorrichtung erklärt.

Figur 9B zeigt eine Draufsicht auf die Förderspeichervorrichtung 49 in einem zweiten Betriebszustand, wobei die Überführungsvorrichtung 55 und der Führungskörper 52 jeweils entlang der ersten Richtung 53 in eine jeweilige zweite Position bewegt wurden. Diese Bewegungen finden während des Betriebs der Förderspeichervorrichtung 49 statt. Dadurch steht auf dem ersten Förderer 50 mehr Platz für Behälter 3 zur Verfügung, so dass im zweiten Betriebszustand mehr Behälter 3 zwischengespeichert werden können, bevor sie über den zweiten Förderer 51 die Förderspeichervorrichtung 49 wieder verlassen. Durch das Bewegen des Führungskörpers 52 in seine zweite Position, wurde die Länge des längenveränderlichen Führungsgeländers 56 im Vergleich zu dem in Figur 9A dargestellten ersten Betriebszustand vergrößert und der Winkel zwischen dem Führungsgeländer 56 und der zweiten Richtung 54 verkleinert.

Figur 9C zeigt eine Draufsicht auf die Förderspeichervorrichtung 49 in einem dritten Betriebszustand, in dem die Überführungsvorrichtung 55 und der Führungskörper 52 jeweils entlang der zweiten Richtung 54 in eine jeweilige dritte Position bewegt wurden, die exemplarisch zwischen der ersten und der zweiten Position liegen. Dadurch steht auf dem ersten Förderer 50 weniger Platz für Behälter 3 als im zweiten Betriebszustand, aber mehr Platz als im ersten Betriebszustand zur Verfügung. Durch das Bewegen des Führungskörpers 52 in seine dritte Position, wurde die Länge des längenveränderlichen Führungsgeländers 56 im Vergleich zu dem in Figur 9B dargestellten zweiten Betriebszustand verkleinert und der Winkel zwischen dem Führungsgeländer 56 und der zweiten Richtung vergrößert.

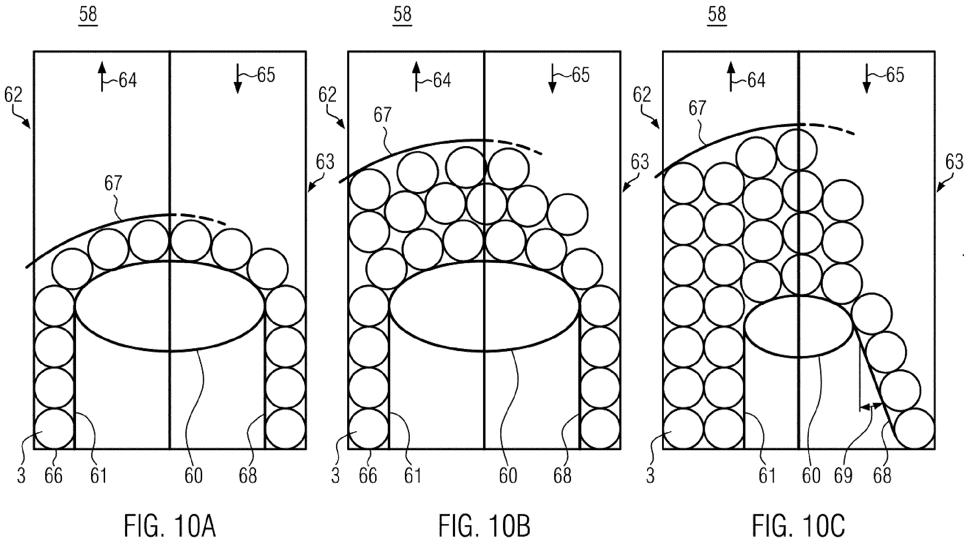

Figur 10A zeigt eine Draufsicht auf eine schematisch reduzierte Darstellung einer Förderspeichervorrichtung 58 in einem ersten Betriebszustand, die der zweiten 44 bzw. vierten Ausführungsform 47 entsprechen kann, mit einem breitenveränderlichen Führungskörper 60 und einem weiteren Führungsgeländer 61. Der Übersichtlichkeit halber wurden die einzelnen Förderbänder des ersten 62 bzw. des zweiten Förderers 63 nicht dargestellt. Auch eine mögliche Übergangsfläche (vierte Ausführungsform 47) entlang derer oder mittels derer der Führungskörper 60 in die erste 64 bzw. die zweite Richtung 65 bewegbar ist, wurde nicht dargestellt, sondern lediglich ein Bereich zwischen dem ersten 62 und dem zweiten Förderer 63.

Das weitere Führungsgeländer 61 ist derart angeordnet, dass auf dem ersten Förderer 62 eine Bahn 66 zum Fördern von Behältern 3 in die erste Richtung 64 zur Verfügung steht. Die Breite des Führungskörpers 60, seine Position und die Position der Überführungsvorrichtung 67 sind derart, dass eine einbahnige Überführung der Behälter 3 von dem ersten Förderer 62 zu dem zweiten Förderer 63 erfolgt. Auf der zweiten Förderoberfläche werden die Behälter 3 in die zweite Richtung 65 bewegt und entlang des Führungsgeländers 68 in einer einzelnen, lückenlosen Spur angeordnet. Das Führungsgeländer 68 ist in dieser Anordnung parallel oder zumindest näherungsweise parallel zu der zweiten Richtung angeordnet, d.h. der Winkel zwischen dem Führungsgeländer 68 und der zweiten Richtung 65 beträgt 0° oder näherungsweise 0°.

Wenn sich der Speicherbedarf erhöht, kann wie in der Figur 10B gezeigten Draufsicht, die Förderspeichervorrichtung 58 in einen zweiten Betriebszustand verbracht werden, in dem die Überführungsvorrichtung 67 in die erste Richtung 64 bewegt wird, so dass zwischen der Überführungsvorrichtung 67 und dem Führungskörper 60 mehr Platz für Behälter 3 zur Verfügung steht. Durch das Führungsgeländer 68 ist aber auch dann möglich, die Behälter auf dem zweiten Förderer 63 in einer einzelnen, lückenlosen Spur anzuordnen.

Erhöht sich der Speicherbedarf der Speicherfördervorrichtung 58 weiter, so kann, wie in der Figur 10C dargestellt, der Führungskörper 60 in die zweite Richtung 65 verfahren, seine Breite verkleinert und das weitere Führungsgeländer 61 seitlich verfahren werden. So stehen auf dem ersten Förderer 62 exemplarisch zwei Bahnen zum Fördern von Behältern 3 in die erste Richtung 64 zur Verfügung. Durch das Verfahren des Führungskörpers 60 in die zweite Richtung 65 wird die Länge des weiteren Führungsgeländers 61 verkleinert. Die Länge des Führungsgeländers 68 wird durch die Verkleinerung der Breite des Führungskörpers 60 verkleinert und der Winkel 69 zwischen dem Führungsgeländer 68 und der zweiten Richtung 65 wird durch die Verkleinerung der Breite des Führungskörpers 60 vergrößert.

## Patentansprüche

1. Förderspeichervorrichtung (1, 23, 44, 47, 49, 58) für Behälter (3), wie Flaschen oder Dosen, umfassend:
- einen ersten antreibbaren Förderer (2, 24, 50, 62), der ausgelegt ist, Behälter (3) auf einer ersten Förderoberfläche (4, 25) in eine erste Richtung (5, 26, 53, 64) zu fördern, und einen zweiten antreibbaren Förderer (6, 27, 51, 63), der ausgelegt ist, Behälter (3) auf einer zweiten Förderoberfläche (7, 28) in eine zweite Richtung (8, 29, 54, 65) zu fördern, wobei der erste Förderer (2, 24, 50, 62) und der zweite Förderer (6, 27, 51, 63) derart parallel zueinander angeordnet sind, dass Behälter (3) von der ersten Förderoberfläche (4, 25) zu der zweiten Förderoberfläche (7, 28) überführbar sind, und wobei die erste Richtung (5, 26, 53, 64) und die zweite Richtung (8, 29, 54, 65) gegenläufig sind,
- eine entlang der Förderer (2, 6, 24, 27, 50, 62) verfahrbare Überführungsvorrichtung (9, 30, 55, 67) zum Überführen von Behältern (3) von der ersten Förderoberfläche (4, 25) zu der zweiten Förderoberfläche (7, 28),
- einen entlang eines Bereichs (11, 32) zwischen dem ersten Förderer (2, 24, 50, 62) und dem zweiten Förderer (6, 27, 51, 63) oberhalb der ersten Förderoberfläche (4, 25) und der zweiten Förderoberfläche (7, 28) verfahrbaren Führungskörper (12, 33, 52, 60),
- ein Führungsgeländer (14, 35, 56, 68) zum Führen und Vereinzeln von Behältern (3), das in einem Winkel (15, 36) zur zweiten Richtung (8, 29, 54, 65) und oberhalb der zweiten Förderoberfläche (7, 28) verläuft,
**dadurch gekennzeichnet, dass**
das Führungsgeländer (14, 35, 56, 68) längenveränderlich ausgebildet ist und derart mit dem Führungskörper (12, 33, 52, 60) zusammenwirkt, dass eine Länge (L, LL) des Führungsgeländers (14, 35) und der Winkel (15, 36, 57, 69) veränderbar sind.

2. Förderspeichervorrichtung nach Anspruch 1, wobei das Führungsgeländer (14, 35, 56, 68) teleskopartig ausgebildet ist, wobei vorzugsweise das Führungsgeländer (14, 35, 56, 68) drehbar um eine erste senkrechte Achse (16, 37) und drehbar um eine zweite senkrechte Achse (17, 38) ausgebildet ist, wobei die erste Achse (16, 37) an dem Führungskörper (12, 33, 52, 60) vorgesehen ist und wobei die zweite Achse (17, 38) in einem nicht-verfahrbaren Endbereich (18, 39) des zweiten Förderers (5, 27, 51, 63) vorgesehen ist.

3. Förderspeichervorrichtung nach Anspruch 1, wobei das Führungsgeländer als ein längenveränderliches und gespanntes Band ausgebildet ist, wobei vorzugsweise eine Längenveränderung des Bands durch ein Auf- bzw. Abwickeln des Bandes erfolgt, wobei vorzugsweise eine Spannung des Bands mittels mindestens einem Motor und/oder mittels mindestens einer Feder erreicht wird.

4. Förderspeichervorrichtung nach einem der Ansprüche 1 bis 3, wobei der Führungskörper (12, 33, 52, 60) in seiner Breite (B, BB) veränderbar ausgebildet ist, wobei die Breite (B, BB) mittels einer Spindel oder mittels eines Linearantriebs veränderbar ist, wobei vorzugsweise der Führungskörper (12, 33, 52, 60) unabhängig von der Überführungsvorrichtung (9, 30, 55, 67) verfahrbar ausgebildet ist oder der Führungskörper (12, 33, 52, 60) mit der Überführungsvorrichtung (9, 30, 55, 67) gekoppelt und zusammen mit der Überführungsvorrichtung (9, 30, 55, 67) verfahrbar ausgebildet ist.

5. Förderspeichervorrichtung nach einem der Ansprüche 1 bis 4, wobei der erste Förderer (2, 24, 50, 62) und der zweite Förderer (6, 27, 51, 63) als lineare Förderer ausgebildet sind.

6. Förderspeichervorrichtung nach einem der Ansprüche 1 bis 5, wobei der erste Förderer (2, 24, 50, 62) und/oder der zweite Förderer (6, 27, 51, 63) jeweils mehrere parallele, endlose Förderbänder (2a, 6a, 24a, 27a) oder Scharnierbandketten (2a, 6a, 24a, 27a) umfassen, wobei die Förderbänder (2a, 6a, 24a, 27a) oder die Scharnierbandketten (2a, 6a, 24a, 27a) vorzugsweise jeweils einzeln antreibbar sind.

7. Förderspeichervorrichtung nach einem der Ansprüche 1 bis 6, wobei sich die Überführungsvorrichtung (9, 30, 55, 67) im Wesentlichen quer über und oberhalb der ersten Förderoberfläche (4, 25) erstreckt.

8. Förderspeichervorrichtung nach Anspruch 7, wobei sich die Überführungsvorrichtung (9, 30, 55, 67) zudem im Wesentlichen quer über und oberhalb zumindest eines Teils der zweiten Förderoberfläche (7, 28) erstreckt.

9. Förderspeichervorrichtung nach einem der Ansprüche 1 bis 8, wobei die Überführungsvorrichtung (9, 30, 55, 67) ein bogenförmiges Führungselement (9a, 30a) oder ein gerades Führungselement umfasst, wobei vorzugsweise über das Führungselement (9a, 30a) ein antreibbares, endloses Förderband (9b, 30b) verläuft, wobei das Förderband (9b, 30b) vorzugsweise als Gripperkette oder Riemen ausgebildet ist.

10. Förderspeichervorrichtung nach einem der Ansprüche 1 bis 9, wobei zwischen der ersten Förderoberfläche (25) und der zweiten Förderoberfläche (28) eine langgestreckte Übergangsfläche (32) angeordnet ist.

11. Förderspeichervorrichtung nach Anspruch 10, wobei die Übergangsfläche (32) als ein dritter Förderer mit einer dritten Förderoberfläche ausgebildet ist, der in die erste Richtung (26, 53, 64) und in die zweite Richtung (29, 54, 65) bewegbar ausgebildet ist.

12. Förderspeichervorrichtung nach Anspruch 11, wobei der Führungskörper (33, 52, 60) an der dritten Förderoberfläche angeordnet und vorzugsweise mittels des dritten Förderers verfahrbar ist oder wobei der Führungskörper mittels einer Rolle auf der dritten Förderoberfläche abgestützt wird.

13. Förderspeichervorrichtung nach einem der Ansprüche 1 bis 12, weiter umfassend ein weiteres Führungsgeländer (45, 48, 61) zum Führen von Behältern (3), das oberhalb der ersten Förderoberfläche (4, 25) und parallel zu der ersten Richtung (5, 26, 53, 64) verläuft, wobei das weitere Führungsgeländer (45, 48, 61) längenveränderlich ausgebildet ist, vorzugsweise teleskopartig, wobei vorzugsweise das weitere Führungsgeländer (45, 48, 61) parallel zu der ersten Förderoberfläche (4, 25) und senkrecht zu der ersten Richtung (5, 26, 53, 64) seitlich verschiebbar ausgebildet ist.

14. Förderspeichervorrichtung nach einem der Ansprüche 1 bis 13, weiter umfassend einen oder mehrere Antriebsmotoren (19, 20, 21, 22, 40, 41, 42, 43) für den ersten Förderer (2, 24, 50, 62), den zweiten Förderer (6, 27, 51, 63), die Überführungsvorrichtung (9, 30, 55, 67) und den Führungskörper (12, 33, 52, 60).

15. Förderspeichervorrichtung nach einem der Ansprüche 1 bis 14, weiter umfassend mindestens eine Sensorvorrichtung und mindestens eine Steuervorrichtung, wobei die Sensorvorrichtung ausgelegt ist, Behälter (3) mittels eines oder mehrerer Sensoren zu erfassen, entsprechende Sensordaten zu erstellen und die Sensordaten an die mindestens eine Steuervorrichtung zu übermitteln, die ausgelegt ist, den ersten Förderer (2, 24, 50, 62), den zweiten Förderer (6, 27, 51, 63), die Überführungsvorrichtung (9, 30, 55, 67) und den Führungskörper (12, 33, 52, 60) zu steuern,
wobei vorzugsweise die Steuervorrichtung derart ausgebildet ist, dass ein Verfahren der Überführungsvorrichtung (9, 30, 55, 67) auf Basis von Fördergeschwindigkeiten des ersten Förderers (2, 24, 50, 62) und/oder des zweiten Förderers (6, 27, 51, 63) und/oder
wobei vorzugsweise eine Kamera Daten eines Belegungszustands eines zufördernden und/oder eines abfördernden Förderers vor bzw. nach der Förderspeichervorrichtung (1, 23, 44, 47, 49, 58) erfasst und die Steuervorrichtung auf Basis dieser Daten die Überführungsvorrichtung (9, 30, 55, 67) derart verfährt, dass eine benötigte Speicherkapazität der Förderspeichervorrichtung (1, 23, 44, 47, 49, 58) bereitgestellt wird.

16. Verfahren zum Betreiben einer Förderspeichervorrichtung (1, 23, 44, 47, 49, 58) nach einem der Ansprüche 1 bis 15.

## Claims

1. Conveying storage device (1, 23, 44, 47, 49, 58) for containers (3) such as bottles or cans, comprising:
- a first drivable conveyor (2, 24, 50, 62) which is adapted to convey containers (3) on a first conveying surface (4, 25) in a first direction (5, 26, 53, 64), and a second drivable conveyor (6, 27, 51, 63) which is adapted to convey containers (3) on a second conveying surface (7, 28) in a second direction (8, 29, 54, 65), wherein the first conveyor (2, 24, 50, 62) and the second conveyor (6, 27, 51, 63) are positioned parallel to one another such that containers (3) are transferable from the first conveying surface (4, 25) to the second conveying surface (7, 28), and wherein the first direction (5, 26, 53, 64) and the second direction (8, 29, 54, 65) are opposite to each other,
- a transfer device (9, 30, 55, 67), which is movable along the conveyor (2, 6, 24, 27, 50, 62) for transferring containers (3) from the first conveying surface (4, 25) to the second conveying surface (7, 28),
- a guide body (12, 33, 52, 60) which is movable along a region (11, 32) between the first conveyor (2, 24, 50, 62) and the second conveyor (6, 27, 51, 63) above the first conveying surface (4, 25) and the second conveying surface (7, 28),
- a guide railing (14, 35, 56, 68) for guiding and separating containers (3), which extends at an angle (15, 36) to the second direction (8, 29, 54, 65) and above the second conveying surface (7, 28),
**characterized in that**
the guide railing (14, 35, 65, 68) is variable in length and cooperates with the guide body (12, 33, 52, 60) such that the length (L, LL) of the guide railing (14, 35) and the angle (15, 36, 57, 69) can be varied.

2. Conveying storage device according to claim 1, wherein the guide railing (14, 35, 56, 68) is configured telescopically, wherein preferably the guide railing (14, 35, 56, 68) is configured rotatably about a first vertical axis (16, 37) and rotatably about a second vertical axis (17, 38), wherein the first axis (16, 37) is provided on the guide body (12, 33, 52, 60) and wherein the second axis (17, 38) is provided in a non-movable end region (18, 39) of the second conveyor (5, 27, 51, 63).

3. Conveying storage device according to claim 1, wherein the guide railing is configured as a length-variable and tensioned band, wherein preferably a length-variation of the band takes place by winding up or unwinding the band, wherein preferably a tension of the band is achieved by at least one motor and/or by at least one spring.

4. Conveying storage device according to one of claims 1 to 3, wherein the guide body (12, 33, 52, 60) is configured to be variable in its width (B, BB), wherein the width (B, BB) is variable by a a spindle or by a linear drive, wherein preferably the guide body (12, 33, 52, 60) is configured to be movable independently of the transfer device (9, 30, 55, 67) or the guide body (12, 33, 52, 60) is coupled to the transfer device (9, 30, 55, 67) and is configured to be movable together with the transfer device (9, 30, 55, 67).

5. Conveying storage device according to one of the claims 1 to 4, wherein the first conveyor (2, 24, 50, 62) and the second conveyor (6, 27, 51, 63) are configured as linear conveyors.

6. Conveying storage device according to one of the claims 1 to 5, wherein the first conveyor (2, 24, 50, 62) and/or the second conveyor (6, 27, 51, 63) each comprise a plurality of parallel, endless conveyor belts (2a, 6a, 24a, 27a) or slat-band chains (2a, 6a, 24a, 27a), wherein the conveyor belts (2a, 6a, 24a, 27a) or the slat-band chains (2a, 6a, 24a, 27a) are preferably each drivable individually.

7. Conveying storage device according to one of the claims 1 to 6, wherein the transfer device (9, 30, 55, 67) extends substantially transversely across and above the first conveying surface (4, 25).

8. Conveying storage device according to claim 7, wherein the transfer device (9, 30, 55, 67) further extends substantially transversely across and above at least a portion of the second conveying surface (7, 28).

9. Conveying storage device according to one of the claims 1 to 8, wherein the transfer device (9, 30, 55, 67) comprises an arcuate guide element (9a, 30a) or a straight guide element, wherein preferably a drivable, endless conveyor belt (9b, 30b) extends over the guide element (9a, 30a), wherein the conveyor belt (9b, 30b) is preferably configured as a gripper chain or belt.

10. Conveying storage device according to one of the claims 1 to 9, wherein an elongated transition surface (32) is arranged between the first conveying surface (25) and the second conveying surface (28).

11. Conveying storage device according to claim 10, wherein the transition surface (32) is configured as a third conveyor with a third conveying surface which is configured to be movable in the first direction (26, 53, 64) and in the second direction (29, 54, 65).

12. Conveying storage device according to claim 11, wherein the guide body (33, 52, 60) is arranged on the third conveying surface and is preferably movable by the third conveyor or wherein the guide body is supported on the third conveying surface by a roller.

13. Conveying storage device according to one of the claims 1 to 12, further comprising a further guide railing (45, 48, 61) for guiding containers (3), which extends above the first conveying surface (4, 25) and parallel to the first direction (5, 26, 53, 64), wherein the further guide railing (45, 48, 61) is configured to be variable in length, preferably telescopically, wherein preferably the further guide railing (45, 48, 61) is configured to be laterally displaceable parallel to the first conveying surface (4, 25) and perpendicular to the first direction (5, 26, 53, 64).

14. Conveying storage device according to one of the claims 1 to 13, further comprising one or more drive motors (19, 20, 21, 22, 40, 41, 42, 43) for the first conveyor (2, 24, 50, 62), the second conveyor (6, 27, 51, 63), the transfer device (9, 30, 55, 67), and the guide body (12, 33, 52, 60).

15. Conveying storage device according to one of the claims 1 to 14, further comprising at least one sensor device and at least one control device, wherein the sensor device is configured to detect containers (3) by f one or more sensors, to generate corresponding sensor data and to transmit the sensor data to the at least one control device which is adapted to control the first conveyor (2, 24, 50, 62), the second conveyor (6, 27, 51, 63), the transfer device (9, 30, 55, 67), and the guide body (12, 33, 52, 60),
wherein preferably the control device is configured such that a movement of the transfer device (9, 30, 55, 67) on the basis of conveying speeds of the first conveyor (2, 24, 50, 62) and/or of the second conveyor (6, 27, 51, 63) takes place, and/or
wherein preferably a camera detects data of an occupancy state of a feeding and/or a discharging conveyor before or after the conveying storage device (1, 23, 44, 47, 49, 58) and the control device moves the transfer device (9, 30, 55, 67) on the basis of this data in such a way that a required storage capacity of the conveying storage device (1, 23, 44, 47, 49, 58) is provided.

16. Method of operating a conveying storage device (1, 23, 44, 47, 49, 58) according to one of the claims 1 to 15.

## Revendications

1. Dispositif de stockage pour convoyeur (1, 23, 44, 47, 49, 58) destiné à des contenants (3), tels que des bouteilles ou des boîtes, comprenant :
- un premier convoyeur pouvant être entraîné (2, 24, 50, 62) conçu pour convoyer des contenants (3) sur une première surface de convoyeur (4, 25) dans une première direction (5, 26, 53, 64), et un deuxième convoyeur pouvant être entraîné (6, 27, 51, 63) conçu pour convoyer des contenants (3) sur une deuxième surface de convoyeur (7, 28) dans une seconde direction (8, 29, 54, 65), dans lequel le premier convoyeur (2, 24, 50, 62) et le deuxième convoyeur (6, 27, 51, 63) sont agencés parallèlement l'un par rapport à l'autre de telle sorte que les contenants (3) peuvent être transférés de la première surface de convoyeur (4, 25) à la deuxième surface de convoyeur (7, 28), et dans lequel la première direction (5, 26, 53, 64) et la seconde direction (8, 29, 54, 65) sont opposées,
- un dispositif de transfert (9, 30, 55, 67) mobile le long des convoyeurs (2, 6, 24, 27, 50, 62) pour transférer des contenants (3) de la première surface de convoyeur (4, 25) vers la deuxième surface de convoyeur (7, 28),
- un corps de guidage (12, 33, 52, 60) mobile le long d'une zone (11, 32) située entre le premier convoyeur (2, 24, 50, 62) et le deuxième convoyeur (6, 27, 51, 63), au-dessus de la première surface de convoyeur (4, 25) et de la deuxième surface de convoyeur (7, 28),
- une rampe de guidage (14, 35, 56, 68) pour guider et séparer les contenants (3), qui s'étend selon un angle (15, 36) par rapport à la seconde direction (8, 29, 54, 65) et au-dessus de la deuxième surface de convoyeur (7, 28),
**caractérisé en ce que**
la rampe de guidage (14, 35, 56, 68) est conçue pour varier en longueur et agir conjointement avec le corps de guidage (12, 33, 52, 60) de telle sorte qu'une longueur (L, LL) de la rampe de guidage (14, 35) et l'angle (15, 36, 57, 69) peuvent être modifiés.

2. Dispositif de stockage pour convoyeur selon la revendication 1, dans lequel la rampe de guidage (14, 35, 56, 68) est réalisée de manière télescopique, dans lequel de préférence la rampe de guidage (14, 35, 56, 68) est réalisée de manière à pouvoir tourner autour d'un premier axe vertical (16, 37) et de manière à pouvoir tourner autour d'un second axe vertical (17, 38), dans lequel le premier axe (16, 37) est prévu au niveau du corps de guidage (12, 33, 52, 60) et dans lequel le second axe (17, 38) est prévu au niveau d'une zone d'extrémité non mobile (18, 39) du deuxième convoyeur (5, 27, 51, 63).

3. Dispositif de stockage pour convoyeur selon la revendication 1, dans lequel une rampe de guidage est conçue sous la forme d'une bande à longueur variable et tendue, dans lequel de préférence une modification de longueur de la bande s'effectue par un enroulement ou un déroulement de la bande, dans lequel de préférence une tension de la bande est obtenue au moyen d'au moins un moteur et/ou au moyen d'au moins un ressort.

4. Dispositif de stockage pour convoyeur selon l'une quelconque des revendications 1 à 3, dans lequel le corps de guidage (12, 33, 52, 60) est conçu de manière à ce que sa largeur (B, BB) puisse être modifiée, dans lequel la largeur (B, BB) peut être modifiée au moyen d'une broche ou au moyen d'un entraînement linéaire, dans lequel de préférence le corps de guidage (12, 33, 52, 60) est conçu de manière à pouvoir se déplacer indépendamment du dispositif de transfert (9, 30, 55, 67) ou le corps de guidage (12, 33, 52, 60) est couplé au dispositif de transfert (9, 30, 55, 67) et conçu de manière à pouvoir se déplacer conjointement avec le dispositif de transfert (9, 30, 55, 67).

5. Dispositif de stockage pour convoyeur selon l'une quelconque des revendications 1 à 4, dans lequel le premier convoyeur (2, 24, 50, 62) et le deuxième convoyeur (6, 27, 51, 63) sont réalisés sous la forme de convoyeurs linéaires.

6. Dispositif de stockage pour convoyeur selon l'une quelconque des revendications 1 à 5, dans lequel le premier convoyeur (2, 24, 50, 62) et/ou le deuxième convoyeur (6, 27, 51, 63) comprennent chacun plusieurs bandes transporteuses (2a, 6a, 24a, 27a) ou chaînes de bande de charnière (2a, 6a, 24a, 27a) parallèles et sans fin, dans lequel les bandes transporteuses (2a, 6a, 24a, 27a) ou les chaînes de bande de charnière (2a, 6a, 24a, 27a) peuvent de préférence être entraînées individuellement.

7. Dispositif de stockage pour convoyeur selon l'une quelconque des revendications 1 à 6, dans lequel le dispositif de transfert (9, 30, 55, 67) s'étend sensiblement transversalement sur et au-dessus de la première surface de convoyeur (4, 25).

8. Dispositif de stockage pour convoyeur selon la revendication 7, dans lequel le dispositif de transfert (9, 30, 55, 67) s'étend en outre sensiblement transversalement sur et au-dessus d'au moins une partie de la deuxième surface de convoyeur (7, 28).

9. Dispositif de stockage pour convoyeur selon l'une quelconque des revendications 1 à 8, dans lequel le dispositif de transfert (9, 30, 55, 67) comprend un élément de guidage en forme d'arc (9a, 30a) ou un élément de guidage droit, dans lequel de préférence une bande transporteuse sans fin (9b, 30b) pouvant être entraînée s'étend sur l'élément de guidage (9a, 30a), dans lequel la bande transporteuse (9b, 30b) est de préférence conçue comme une chaîne de préhension ou une courroie.

10. Dispositif de stockage pour convoyeur selon l'une quelconque des revendications 1 à 9, dans lequel une surface de transition s'étendant longitudinalement (32) est agencée entre la première surface de convoyeur (25) et la deuxième surface de convoyeur (28).

11. Dispositif de stockage pour convoyeur selon la revendication 10, dans lequel la surface de transition (32) est réalisée sous la forme d'un troisième convoyeur présentant une troisième surface de convoyeur qui est réalisée de manière à pouvoir être déplacée dans la première direction (26, 53, 64) et dans la seconde direction (29, 54, 65).

12. Dispositif de stockage pour convoyeur selon la revendication 11, dans lequel le corps de guidage (33, 52, 60) est disposé sur la troisième surface de convoyeur et peut être déplacé de préférence au moyen du troisième convoyeur ou dans lequel le corps de guidage est soutenu au moyen d'un rouleau sur la troisième surface de convoyeur.

13. Dispositif de stockage pour convoyeur selon l'une quelconque des revendications 1 à 12, comprenant en outre une rampe de guidage supplémentaire (45, 48, 61) pour guider des contenants (3) qui s'étend au-dessus de la première surface de convoyeur (4, 25) et parallèlement à la première direction (5, 26, 53, 64), dans lequel la rampe de guidage supplémentaire (45, 48, 61) est conçue de manière à pouvoir varier en longueur, de préférence de manière télescopique, dans lequel de préférence la rampe de guidage supplémentaire (45, 48, 61) est conçue de manière à pouvoir être déplacée latéralement parallèlement à la première surface de convoyeur (4, 25) et perpendiculairement à la première direction (5, 26, 53, 64).

14. Dispositif de stockage pour convoyeur selon l'une quelconque des revendications 1 à 13, comprenant en outre un ou plusieurs moteurs d'entraînement (19, 20, 21, 22, 40, 41, 42, 43) pour le premier convoyeur (2, 24, 50, 62), le deuxième convoyeur (6, 27, 51, 63), le dispositif de transfert (9, 30, 55, 67) et le corps de guidage (12, 33, 52, 60).

15. Dispositif de stockage pour convoyeur selon l'une quelconque des revendications 1 à 14, comprenant en outre au moins un dispositif de capteur et au moins un dispositif de commande, dans lequel le dispositif de capteur est conçu pour détecter des contenants (3) au moyen d'un ou de plusieurs capteurs, pour créer des données de capteur correspondantes et pour transmettre les données de capteur au au moins un dispositif de commande qui est conçu pour commander le premier convoyeur (2, 24, 50, 62), le deuxième convoyeur (6, 27, 51, 63), le dispositif de transfert (9, 30, 55, 67) et le corps de guidage (12, 33, 52, 60),
dans lequel de préférence le dispositif de commande est conçu de telle sorte que le dispositif de transfert (9, 30, 55, 67) agit sur la base des vitesses de transport du premier convoyeur (2, 24, 50, 62) et/ou du deuxième convoyeur (6, 27, 51, 63) et/ou de préférence, une caméra enregistre des données d'un état d'occupation d'un convoyeur d'alimentation et/ou d'évacuation avant ou après le dispositif de stockage pour convoyeur (1, 23, 44, 47, 49, 58) et le dispositif de commande déplace le dispositif de transfert (9, 30, 55, 67) sur la base de ces données de manière à fournir une capacité de stockage nécessaire au dispositif de stockage pour convoyeur (1, 23, 44, 47, 49, 58).

16. Procédé pour faire fonctionner un dispositif de stockage pour convoyeur (1, 23, 44, 47, 49, 58) selon l'une des revendications 1 à 15.
